# EUROPEAN PATENT APPLICATION

(11) **EP 2 698 417 A1**
(43) Date of publication of application: **19.02.2014**
(21) Application number: 13460056.8
(22) Date of filing: 12.08.2013
(51) Int. Cl.: C10L 5/36, C10L 5/40, C10L 5/44

(54) **Solid fuel, particularly for the power industry, and production method thereof**

(30) Priority: 17.08.2012 PL 40043012
(71) Applicant: Revita Bio Sp. z o.o., 00-660 Warszawa (PL)
(72) Inventor: Tkacz, Elzbieta, 00-061 Warszawa (PL); Mezyk, Piotr, 42-603 Tarnowskie Góry (PL); Wychota, Aleksander, 45-850 Opole (PL)
(74) Representative: Szczepanska, Krystyna

(57) **Abstract**

Solid fuel, particularly for the power industry, for various types of boilers, comprises a mixture of selected biodegradable municipal and/or industrial waste of cellulose products, selected municipal and/or industrial waste of fibrous materials from natural textiles and fibres, sifted stabilized fractions of biodegradable waste, phytomass waste comprising biodegradable waste from forest husbandry and/or from tree pruning in towns and cities and/or from gardens, parks and/or straw chaff and/or press cake, sludges and other residues from plant produce and/or wood processing without polish and impregnants, and/or tobacco waste and/or cork waste and/or stabilized municipal sewage sludge.

The invention also relates to a method of manufacturing solid fuel, particularly for the power industry.

## Description

The present invention relates to a fuel, particularly for the power industry, and production method thereof exclusively from selected biodegradable waste materials, which are deposited in large amounts in municipal landfills and constitute an environmental problem, and from industrial waste, the said fuel providing energy input for boilers of various types at high heat content and low content of sulphur compounds and ash during combustion in boilers.

Huge amounts of municipal waste are generated in urbanized areas. Municipal waste mainly comprises food waste of vegetable origin, food waste of animal origin, paper waste, cardboard waste, plastic waste, textile waste, glass waste, metal waste and other mineral waste. Deposition of municipal waste takes up large areas of land, particularly around towns and cities, causes environmental nuisance and is very expensive. An environmental problem of these landfills are the stabilized fractions of biodegradable waste that contain many constituents harmful to human health.

Very large quantities of waste are generated by the paper industry, textile industry and related industries, tobacco industry.

Large amounts of waste are constituted by phytomass waste from forest husbandry, from tree pruning in towns and cities, from gardens, parks, by waste in the form of press cake, sludges and other residues from plant produce processing. Large urban agglomerations also generate large amounts of stabilized municipal sewage sludge.

The Polish patent specification 176529 teaches of an industrial power fuel formed of a blend of waste fuels containing up to 80 wt% of coal slurries and up to 60 % of organic fibre waste or up to 30 wt% of refinery waste, less than 0.3 wt% of filtration waste from wastewater treatment plant and 2.5 wt% of liquid soap or starch and up to 1.5 wt% of glycol, wherein the fuel that contains refinery waste also contains up to 20 wt% of milk of lime.

The Polish patent specification 206204 describes a fuel for boilers, particularly for fluidised bed boilers, and a method of manufacture thereof. This fuel comprises an aerobically fermented mixture of one part by weight of dewatered sludge from wastewater treatment plant with dry matter content of 10 to 50 wt% and 0.5 to 10 parts by weight of solid biological waste. The biological waste is at least one of the waste materials selected from a group comprising mowed grass, hay, tree cuttings, leaves, shavings, rapeseed straw or other biological waste from agricultural plant produce, with the exception of cereal straw, or a mixture thereof. The method consists in mixing one part by weight of dewatered sludge from wastewater treatment plant with dry matter content of 10 to 50 wt% with 0.5 to 10 parts by weight of solid biological waste, followed by subjecting the mixture to aerobic fermentation for 6 to 8 days or by carrying out the fermentation in a controlled manner for 2 to 4 days. Upon mixing all components, the fuel is granulated in a rotating granulator.

Polish patent application P-303083 discloses a solid fuel, particularly one containing waste materials. The solid fuel comprises a mixture of a power medium, which optionally acts as a binder or carrier, wherein the amount of carrier in the fuel is at least 10 vol%. The power medium comprises a size-reduced, preferably down to maximum particle size of 5 mm, selected plastic or a mixture of plastics. The plastics used include polyethylene and/or polypropylene and/or polystyrene and/or polyethyleneterephthalate. The carrier used is preferably size-reduced waste of vegetable origin and/or pumice and/or ash and/or slag. The carrier preferably also contains components that react with noxious gases and it may also include small admixture of flammable substance.

Polish patent application P-381786 discloses an alternative fuel and method of manufacture thereof from sewage sludge and separated fractions of municipal waste, the said fuel comprising 25 to 50% of sewage sludge dewatered to circa 80% moisture content, 10 to 20% of separated fractions of municipal waste of organic nature, and 50 to 75% of rapeseed straw and/or sawdust and/or shavings. The method of manufacture of the alternative fuel consists in mixing the pre-dried sludge dewatered in the process of wastewater treatment and size-reduced fractions of organic waste separated from municipal waste with a second size-reduced biomass product. The mixture is pre-dried, ground and subjected to further evaporation. The obtained homogenous powdery mass is granulated and cooled rapidly.

The object of the present invention is to provide a solid fuel, particularly for the power industry, for boilers of various types, the basic components of said fuel being exclusively selected biodegradable waste, both municipal and industrial waste, and phytomass waste of various kind, as well as stabilized municipal sewage sludge, enabling thereby processing of large amounts of various waste deposited in landfills and obtaining a fuel of high heat content and low content of ash and sulphur compounds during combustion thereof in boilers.

Solid fuel, particularly for the power industry, according to the invention comprises a mixture of up to 80 wt% of selected biodegradable municipal and/or industrial waste of cellulose products, up to 80 wt% of selected municipal and/or industrial waste of fibrous materials from natural textiles and fibres, up to 50 wt% of sifted stabilized fractions of biodegradable waste, up to 25 wt% of phytomass waste comprising biodegradable waste from forest husbandry and/or from tree pruning in towns and cities and/or from gardens, parks and/or straw chaff and/or press cake and/or sludges and other residues from plant produce and/or wood processing, preferably without polish and impregnants, and/or 5 to 8 wt% of tobacco waste and/or up to 5 wt% of cork waste and/or 5 to 15 wt% of stabilized municipal sewage sludge. The selected biodegradable municipal waste from mechanical processing of mixed municipal and/or industrial waste of cellulose products comprises waste from sorting, from mechanical processing of paper, cardboard, paper and cardboard packaging, preferably not containing contaminants in the form of printing ink andimpregnants.

Method of manufacture of solid fuel, particularly for the power industry, according to the invention is characterized by that up to 80 wt% of selected biodegradable municipal and/or industrial waste of cellulose products, up to 80 wt% of selected municipal and/or industrial waste of fibrous materials from natural textiles and fibres, up to 25 wt% of biodegradable phytomass waste, and/or 5 to 8 wt% of tobacco waste and/or up to 5 wt% of cork waste is subjected to mixing and size reduction, preferably down to 0.1 - 30 mm, drying in a high-speed mill, followed by adding to the thus obtained size-reduced mixture of biodegradable components placed in a milling and drying device up to 50 wt% of sifted stabilized fractions of biodegradable waste, subjecting the whole composition to further mixing, drying, preferably to 11 - 12 % moisture content, and size reduction, preferably to grain size of 0.1 to 10 mm, until a homogenous mixture is obtained. The obtained product is, depending on the type of boiler where the fuel is to be used, subjected to the process of forming pellets or briquettes without adding any additional binders.

Solid fuel, particularly for the power industry, according to the invention comprises a fuel obtained exclusively from various selected biodegradable fractions of municipal and/or industrial waste of cellulose products, from selected waste of fibrous materials from natural textiles and fibres, from various types of phytomass waste, from sifted stabilized fractions of biodegradable waste that constitutes a serious environmental issue in landfill sites for various types of waste, as well as from tobacco waste and stabilized municipal sewage sludge.

The method and fuel according to the invention enable processing of large amounts of various waste to obtain a fuel, which due to its composition has a high heat content of ca. 16.5 GJ/kg °C (as received) and ca. 19 GJ/kg °C (dry) and low content of sulphur compounds and ash in combustion process.

This fuel is obtained exclusively from various selected types of biodegradable waste materials without the use of any conventional fuels such as hard coal or lignite. It may be obtained in powdery form or in the form of briquettes or pellets of the size adapted to user needs.

The type of waste making up the fuel according to the invention enables continuous manufacture of the fuel near the site where the fuel is used, enables reduction of the area occupied by landfills and utilization of many types of waste, such as stabilized fractions of biodegradable waste, that create a serious environmental problem in landfills. The method and fuel according to the invention enable utilization of waste fractions that are troublesome for all waste sorting plants and at the same time enable avoiding heavy penalties for improper waste management.

The subject of the invention is illustrated in the following example embodiments.

**Example I**. 300 kg of selected biodegradable municipal waste from mechanical processing of mixed municipal waste comprising cellulose product waste, 100 kg of cotton waste and 100 kg of vegetable matter or straw chaff is introduced into a high-speed mill where it is mixed and size-reduced to 20 mm and dried. Then 500 kg of stabilized fractions of biodegradable waste are added to the obtained mixture in the milling and drying device and the whole composition is mixed, dried to 12% moisture content and further size-reduced to grain size of 0.1 - 5 mm. The product obtained after size reduction and drying has porridge-like consistency. The thus obtained product, depending on the type of boiler where the fuel is to be used, is fed to devices for producing pellets or briquettes of desired dimensions without the use of any additional binders. The calorific value of the obtained fuel is 16 GJ/Mg.

**Example II**. 300 kg of selected biodegradable municipal waste from mechanical processing of mixed municipal waste comprising cellulose product waste, 200 kg of industrial natural textile and fibre waste, 100 kg of vegetable matter in the form of straw or woodchips or sawdust and wood pulp is introduced into a high-speed mill where it is mixed and size-reduced to grain size of 10 to 15 mm. Then 300 kg of stabilized fractions of biodegradable waste and 100 kg of stabilized sewage sludge are added to the obtained mixture in the milling and drying device and the whole composition is mixed, dried to ca. 14% moisture content and further size-reduced to grain size of 0.1 - 3 mm. The thus obtained product, depending on user's requirements and the type of boiler, is fed to devices for producing pellets or briquettes of desired dimensions without the use of any additional binders. The calorific value of the obtained fuel is ca. 15 GJ/Mg.

## Claims

1. Solid fuel, particularly for the power industry, **characterized in that** it comprises a mixture of up to 80 wt% of selected biodegradable municipal and/or industrial waste of cellulose products, up to 80 wt% of selected municipal and/or industrial waste of fibrous materials from natural textiles and fibres, up to 50 wt% of sifted stabilized fractions of biodegradable waste, up to 25 wt% of phytomass waste comprising biodegradable waste from forest husbandry and/or from tree pruning in towns and cities and/or from gardens, parks and/or straw chaff and/or press cake, sludges and other residues from plant produce and/or wood processing without polish and impregnants, and/or 5 to 8 wt% of tobacco waste and/or up to 5 wt% of cork waste and/or 5 to 15 wt% of stabilized municipal sewage sludge.

2. Fuel according to claim 1, **characterized in that** the selected biodegradable municipal waste from mechanical processing of mixed municipal and/or industrial waste of cellulose products comprises waste from sorting, from mechanical processing of paper, cardboard, paper and cardboard packaging, preferably not containing contaminants in the form of printing ink and impregnants.

3. Method of manufacture of solid fuel, particularly for the power industry, **characterized in that** up to 80 wt% of selected biodegradable municipal and/or industrial waste of cellulose products, up to 80 wt% of selected municipal and/or industrial waste of fibrous materials from natural textiles and fibres, up to 25 wt% of biodegradable phytomass waste, and/or 5 to 8 wt% of tobacco waste and/or up to 5 wt% of cork waste is subjected to mixing and size reduction, preferably down to 0.1 - 30 mm, drying in a high-speed mill, followed by adding to the thus obtained size-reduced mixture of biodegradable components placed in a milling and drying device up to 50 wt% of sifted stabilized fractions of biodegradable waste, subjecting the whole composition to further mixing, drying, preferably to 11 - 12 % moisture content, and size reduction, preferably to grain size of 0.1 to 10 mm, until a homogenous mixture is obtained, which is then, depending on the type of boiler where the fuel is to be used, subjected to the process of forming pellets or briquettes without adding any additional binders.

4. Method according to claim 3, **characterized in that** 5 to 15 wt% of stabilized municipal sewage sludge is added to the obtained size-reduced mixture of biodegradable components placed in a milling and drying device.
